# EUROPÄISCHE PATENTSCHRIFT

(11) **EP 1 046 268 B1**
(45) Veröffentlichungstag und Bekanntmachung des Hinweises auf die Patenterteilung: **22.06.2005**
(21) Anmeldenummer: 98966534.4
(22) Anmeldetag: 11.12.1998
(51) Int. Cl.: H04M 1/00

(54) **BENUTZUNGSOBERFLÄCHE FÜR CLASS-FUNKTIONEN IN EINEM FERNSPRECHER**
OPERATING SURFACE FOR CLASS FUNCTIONS IN A TELEPHONE
SURFACE D'UTILISATION POUR "FONCTIONS CLASS" DANS UN TELEPHONE

(30) Priorität: 08.01.1998 DE 19800458
(43) Veröffentlichungstag der Anmeldung: 25.10.2000
(73) Patentinhaber: SIEMENS AKTIENGESELLSCHAFT, 80333 München (DE)
(72) Erfinder: SCHNEIDER-HUFSCHMIDT, Mathias, D-80997 München (DE)
(86) Internationale Anmeldenummer: PCT/DE1998/003647
(87) Internationale Veröffentlichungsnummer: WO 1999/035804

(56) Entgegenhaltungen:
- EP-A- 0 419 948
- EP-A- 0 503 257
- ANDREASEN L ET AL: "ADSI: THE DAWN OF A NEW AGE OF INTERACTIVE SERVICES" TELESIS, Bd. 30, Nr. 97, 1. Dezember 1993, Seiten 35-50, XP000616855

## Beschreibung

Die Erfindung betrifft eine Benutzungsoberfläche für CLASS-Funktionen in einem Fernsprechendgerät. Insbesondere betrifft die Erfindung eine Benutzungsoberfläche für CLASS-Funktionen in einem analogen Fernsprecher eines analogen Netzes und ein Fernsprechgerät mit einer derartigen Benutzungsoberfläche.

Derzeit werden in analogen Fernsprechnetzen sogenannte CLASS-Funktionen eingeführt. Dies sind ISDN-ähnliche Funktionen wie Anrufumleitung (Call Forwarding), Makeln (Brokering), Anklopfen (Call Waiting), etc. Die Verwendung derartiger CLASS-Funktionen in einem analogen Fernsprechnetz birgt die Schwierigkeit, daß das Netz im allgemeinen keine vom Endgerät auswertbare Rückmeldung liefert. Es wird lediglich über den Sprachkanal eine gesprochene Meldung oder ein Quittungston gesendet, was der Benutzer und nicht das Endgerät interpretieren kann. Mit anderen Worten, bei einem positiven Quittungssignal des Netzes, was im folgenden als positive Rückkopplung bezeichnet wird, ist die gewünschte CLASS-Funktion verfügbar, während bei einem negativen Quittungssignal, im folgenden als negative Rückkopplung bezeichnet, die gewünschte CLASS-Funktion nicht verfügbar ist. Da die Rückmeldung des Netzes vom Endgerät nicht interpretierbar ist, weiß demzufolge das Endgerät im allgemeinen nicht, ob das gewünschte Leistungsmerkmal der CLASS-Funktion zur Verfügung steht oder nicht, d.h. das Endgerät hat keine Kenntnis über den ihn betreffenden Netzzustand. Es ist daher schwierig, den Zustand der entsprechenden Netzfunktion bzw. CLASS-Funktion zuverlässig visuell im Endgerät beispielsweise mittels eines Textes oder eines Icons darzustellen, was bei einem Endgerät für ein ISDN-Netz keine Schwierigkeit bereitet.

In herkömmlichen Benutzungsoberflächen eines Komfortfernsprechgeräts werden die CLASS-Funktionen in der Regel über Menüeinträge gesteuert. In Normalfernsprechgeräten werden dafür dezidierte Tasten oder seitens des Benutzers programmierbare Zielwahltasten verwendet. Eine derartige Lösung ist deswegen nachteilig, da Tasten des Fernsprechgeräts für die CLASS-Funktionen bereitgestellt werden müssen, die vom Benutzer unter Umständen selten benutzt werden. Darüber hinaus möchte der Benutzer möglichst viele Zielwahltasten zur Verfügung haben, so daß aufgrund des beschränkten zur Verfügung stehenden Platzes auf dem Fernsprechgerät ein Zielkonflikt entsteht, nämlich einerseits möglichst viele Zielwahltasten und andererseits Sondertasten für CLASS-Funktionen zur Verfügung zu haben. Ferner kann eine zuverlässige Visualisierung des Netzzustandes auf dem Fernsprechgerät nicht vorgenommen werden, da das Gerät keine verläßliche Information über den Netzzustand hat. Da die Geräteinformation nicht mit dem Netzzustand abgeglichen werden kann, kann es daher bei allen Endgeräten zu Falschanzeigen kommen.

EP-A-0 19 948 betrifft ein Verfahren zur Einleitung vermittlungstechnischer Funktionen und Dienste mittels Tasten von Fernsprechstationen mit Arbeitsspeicher und alphanumerischem Display. Dabei wird nach Betätigung einer ersten Sondertaste alle Funktionen und Dienste nacheinander aufgerufen und auf dem Display dargestellt. Durch Betätigen einer zweiten Sondertaste werden die auf dem Display angezeigten Funktionen bzw. Dienste realisiert.

EP-A-0 503 257 betrifft eine Vorrichtung zur Bedienung eines Fernsprechapparates mit einer Auswahltaste und einer Ausführungstaste, die beide an einer Auswerteeinrichtung angeschlossen sind. Durch die Auswahltaste werden bestimmte Funktionen aus einem Speicherbereich ausgewählt, die anschließend mittels der Ausführungstaste ausgeführt werden.

In Andreasen et al:"ADSI: THE DAWN OF A NEW AGE OD INTERACTIVE SERVICES", TELESIS, Bd. 30, Nr. 97, 1. Dezember 1993, S. 35-50, werden CLASS-Funktionen in analogen Netzen beschrieben (ADSI: Analog Display Services Interface).

Der Erfindung liegt daher die Aufgabe zugrunde, eine Benutzungsoberfläche für CLASS-Funktionen eines Fernsprechgerats eines analogen Netzes und ein Fernsprechgerät mit einer derartigen Benutzungsoberfläche zu schaffen, womit eine einfache Bedienung ermöglicht wird, und das den Zielkonflikt zwischen der möglichst großen Anzahl von Zielwahltasten und den notwendigen Tasten für die CLASS-Funktionen löst.

Diese Aufgabe wird durch die Merkmale der Ansprüche 1 und 12 gelöst. Bevorzugte Ausführungsformen der Erfindung sind Gegenstand der Unteransprüche.

Erfindungsgemäß weist eine Benutzungsoberfläche für CLASS-Funktionen eines Fernsprechgeräts eines analogen Netzes die zwei Funktionen "Aktivieren" und "Deaktivieren" auf, so daß die der Funktion "Aktivieren" folgende Befehlssequenz als CLASS- Funktion interpretiert wird und mit der Funktion "Deaktivieren" die nachfolgende "CLASS-Funktion" ausgeschaltet wird.

Ferner kann die Funktion "Aktivieren" zur Steuerung des Funktionsablauf einer komplexen "CLASS-Funktion" verwendet werden.

Zusätzlich können die Funktionen "Aktivieren" und "Deaktivieren" von dem Benutzer zur Signalisierung des Netzzustandes an das Fernsprechgerät verwendet werden, so daß das Fernsprechgerät beispielsweise über eine Textanzeige oder ein Icon den Netzzustand korrekt visualisieren kann.

Vorzugsweise werden die Funktionen "Aktivieren" und "Deaktivieren" durch feste Tasten des Fernsprechgeräts realisiert, allerdings könnten die Funktionen auch als Anzeigeelemente eines Bildschirms realisiert sein, die über eine entsprechende Ansteuerung über eines Cursor, beispielsweise eine Maus, aktiviert werden. Es ist auch eine Ansteuerung über eine Spracheingabe möglich.

Die CLASS-Funktionen der Benutzungsoberfläche werden vorzugsweise durch programmierbare Tasten gebildet. Die Tasten der CLASS-Funktionen können als Zielwahltasten verwendet werden, wenn die Funktion "Aktivieren" bzw. "Deaktivieren" nicht eingeschaltet wird.

In einer bevorzugten Ausführungsform der Erfindung werden in der Benutzungsoberfläche für die Funktionen "Aktivieren", "Deaktivieren" zwei feste Tasten und die CLASS-Funktionen bis zu 14 programmierbare Tasten verwendet, so daß insgesamt 16 Tasten verwendet werden.

Ferner umfaßt die Benutzungsoberfläche vorzugsweise ein Display zur Darstellung der Icons, der Nummern von Anrufern (CLIP-Funktionalität), der Zielwahlbelegung der programmierbaren Tasten, etc. Als Display wird vorzugsweise das Display des Fernsprechgeräts verwendet. Ferner kann die Benutzungsoberfläche ein Beschriftungsfeld aufweisen. Das Beschriftungsfeld kann ebenfalls als elektronisches Display ausgelegt sein.

Vorzugsweise kann in der Benutzungsoberfläche eine Liste der eingehenden Anrufe geführt werden, wobei die Liste vorzugsweise als FIFO organisiert ist. Aus der Liste heraus können Direct Calls abgesetzt werden kann.

Die Erfindung wird nachfolgend anhand einer bevorzugten Ausführungsform anhand der Zeichnungen näher erläutert.

Fig. 1 zeigt eine schematische Darstellung einer in einem Fernsprechgerät eingesetzten Benutzungsoberfläche, und

Fig. 2 zeigt die Benutzungsoberfläche in vergrößerter Darstellung.

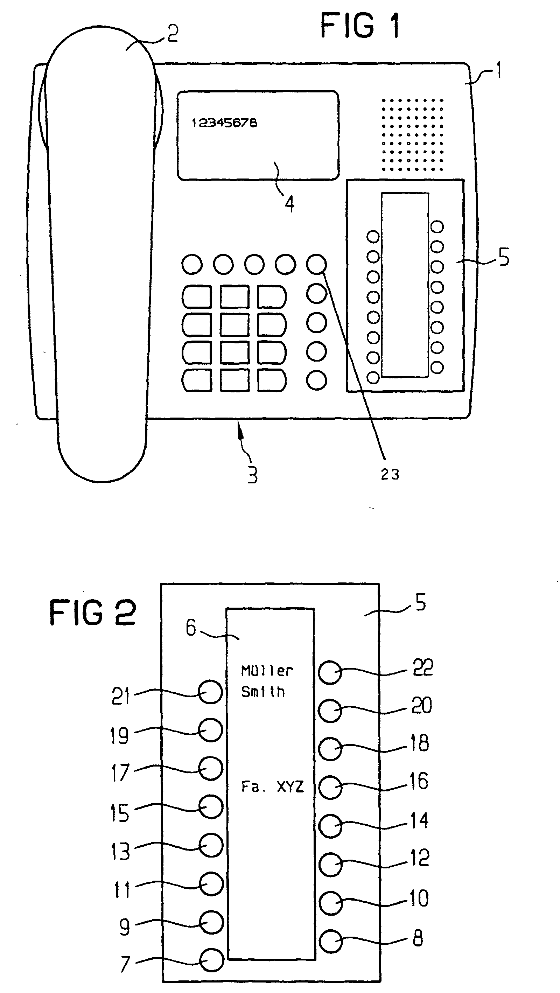

Fig. 1 zeigt ein Fernsprechgerät 1 mit einem Hörer 2, einer üblichen Telefontastatur 3 mit Zusatzfunktionen sowie einer Anzeige (Display) 4. Ferner weist das Fernsprechgerät 1 eine zusätzliche Benutzungsoberfläche 5 für die CLASS-Funktionen auf.

Fig. 2 zeigt die Benutzungsoberfläche 5 in größerer Darstellung. Die Benutzungsoberfläche 5 umfaßt ein Beschriftungsfeld 6, wobei links und rechts des Beschriftungsfelds 6 jeweils 8 Tasten, d.h. insgesamt 16 Tasten angeordnet sind. Davon sind die jeweils untere Taste 7, 8 der beiden Reihen feste Tasten, die mit den Funktionen "Aktivieren " und "Deaktivieren" belegt sind. Wie bereits erläutert dient die Taste 7 mit der Funktion "Aktivieren" in erster Linie zum Einleiten einer CLASS-Funktion, während die Taste 8 mit der Funktion "Deaktivieren" die CLASS-Funktion ausschaltet. Die restlichen 14 Tasten sind programmierbar und sind hinsichtlich ihrer Verwendung als CLASS-Funktionstasten beispielsweise mit den folgenden CLASS-Funktionen belegt:

| | |
|---|---|
| Taste 9 | FWD Uncond |
| Taste 11 | FWD Busy |
| Taste 13 | FWD No Reply |
| Taste 15 | Cancel FWD |
| Taste 17 | CW (Call Waiting) |
| Taste 19 | Direct Call |
| Taste 21 | Audio Redial |
| Taste 10 | Reject |
| Taste 12 | Accept |
| Taste 14 | Swap |
| Taste 16 | Conference |
| Taste 18 | Transfer |
| Taste 20 | CLIR |
| Taste 22 | Nicht belegt |

Die programmierbaren Tasten 9 - 22 sind doppelt belegt, wobei die Doppelfunktionen über die Tasten "Aktivieren" und "Deaktivieren" gesteuert wird. Werden keine CLASS-Funktionen aktiviert, d.h. die Taste 7 im Ausführungsbeispiel nicht gedrückt, so dienen die Tasten 9 - 22 als Zielwahltasten die mit vom Benutzer einprogrammierten Telefonnummern belegt sind. Diese Telefonnummern können in Höhe der entsprechenden Taste auf dem Beschriftungsfeld 6 der Benutzungsoberfläche 5 dargestellt werden. Im Falle der Ausgestaltung des Beschriftungsfeldes 6 als elektronische Anzeige können diese Informationen dort angezeigt werden. Auf der in Fig. 1 dargestellten Anzeige 4 werden Icons und/oder Ziffern dargestellt, so daß der Zustand des Geräts bzw. des Netzes visualisiert wird.

Vorzugsweise sind die Tasten der Funktionen "Aktivieren" und "Deaktivieren" von den restlichen Tasten farblich abgesetzt. Beispielsweise ist die Funktionstaste 7 "Aktivieren" in der Farbe Grün gestaltet, während die Funktionstaste 8 "Deaktivieren" in Rot ausgeführt ist.

Die hier eingesetzten CLASS-Funktionen sind die 4 CF-Funktionen (Call Forwarding) CFU (Call Forwarding Unconditioned, Taste 9), CFB (Call Forwarding Busy, Taste 11), CFN (Call Forwarding No Reply, Taste 13) und General De-Activation (Taste 15). Ferner werden die CLASS-Funktionen CLIR (Calling Line Identification Restriction, Taste 22), CW (Call Waiting, Taste 17), Fixed Destination Call (Direct Call, Taste 19), Automatic Redial (Taste 21) sowie die 5 Brokering-Funktionen R0 bis R4 (Tasten 10, 12, 14, 16 und 18) realisiert.

Im folgenden werden Beispiele des Bedienungsablaufs eines mit einer derartigen Benutzungsoberfläche versehenen Fernsprechgeräts gegeben:
I. Aktivieren einer CLASS-Funktion im Fall einer positiven Rückkopplung:
   1. Hörer abnehmen,
   2. Grüne Taste 7 (Funktion "Aktivieren") drücken,
   3. Gewünschte Funktionstaste drücken,
   4. Eventuelle Eingabe der PIN und sonstiger notwendiger Daten an der Cursorposition,
   5. Beenden des Strings von Punkt 4 durch:
      5 Sekunden warten, oder
      Manuelles Eingeben von #, oder
      Drücken der Grünen Taste 7
   6. Im Falle einer positiven Rückkopplung:
      Hörer auflegen, oder
      5 Sekunden warten, oder
      Drücken der Grünen Taste 7
II. Aktivieren einer CLASS-Funktion im Fall einer negativen Rückkopplung:
   1. Hörer abnehmen,
   2. Grüne Taste 7 (Funktion "Aktivieren") drücken,
   3. Gewünschte Funktionstaste drücken,
   4. Eventuelle Eingabe der PIN und sonstiger notwendiger Daten an der Cursorposition,
   5. Beenden des Strings von Punkt 4 durch:
      5 Sekunden warten, oder
      Manuelles Eingeben von #, oder
      Drücken der Grünen Taste 7
   6. Im Falle einer negativen Rückkopplung:
      Drücken der Roten Taste 8 innerhalb von 5 Sekunden.
III. Deaktivieren einer CLASS-Funktion im Fall einer positiven Rückkopplung:
   1. Hörer abnehmen,
   2. Rote Taste 8 (Funktion "Deaktivieren") drücken,
   3. Gewünschte Funktionstaste drücken,
   4. Eventuelle Eingabe der PIN und sonstiger notwendiger Daten an der Cursorposition,
   5. Beenden des Strings von Punkt 4 durch:
      5 Sekunden warten, oder
      Manuelles Eingeben von #, oder
      Drücken der Grünen Taste 7
   6. Im Falle einer positiven Rückkopplung:
      Hörer auflegen, oder
      5 Sekunden warten, oder
      Drücken der Grünen Taste 7.
IV. Deaktivieren einer CLASS-Funktion im Fall einer negativen Rückkopplung:
   1. Hörer abnehmen,
   2. Rote Taste 8 (Funktion "Deaktivieren") drücken,
   3. Gewünschte Funktionstaste drücken,
   4. Eventuelle Eingabe der PIN,
   5. Beenden des Strings von Punkt 4 durch:
      5 Sekunden warten, oder
      Manuelles Eingeben von #, oder
      Drücken der Grünen Taste 7
   6. Im Falle einer negativen Rückkoppiung:
      Drücken der Roten Taste 8 innerhalb von 5 Sekunden.

Ferner wird eine Liste der eingegangenen Anrufe geführt, wobei alle eingegangenen Anrufe, ob sie nun erfolgreich waren oder nicht, gespeichert werden. Vorzugsweise ist diese Liste als FIFO realisiert, wobei in der bevorzugten Ausführungsform die Liste ein Maximum von 10 Einträgen umfaßt. Wiederholungen, d.h. wiederholende Anrufe des gleichen Anrufers, werden aus der Liste entfernt, so daß die Liste in diesem Fall nur noch den letzten Anruf dieses Anrufers enthält. Nicht erfolgreiche Anrufversuche können optisch durch das Blinken oder Aufleuchten einer Anrufliste-Taste angezeigt werden.

Die Anrufliste kann durch Betätigen einer Taste 23 "Anrufliste" aufgerufen werden. In diesem ersten Zustand werden die Nummern der Anrufer dargestellt und der Benutzer kann durch erneutes Drücken der Taste 23 "Anrufliste" durch die Liste scrollen. Wird in diesem ersten Zustand für eine vorbestimmte Zeit, beispielsweise 30 Sekunden, keine Aktivität gezeigt oder die Rote Taste 8 gedrückt, so wird dieser erste Zustand verlassen und die Benutzungsoberfläche kehrt in den "Idle"-Zustand zurück.

Durch Drücken der Grünen Taste 7 geht die Benutzungsoberfläche von dem ersten in einen zweiten Zustand über, in dem zusätzliche Information über den im ersten Zustand gerade betrachteten Anruf der Liste dargestellt wird. Durch Drücken der Roten Taste 8 oder durch ein Nichtaktivität für einen zweiten vorbestimmten Zeitraum, beispielsweise 5 Sekunden, kehrt die Benutzungsoberfläche in den ersten Zustand zurück.

Durch ein erneutes Drücken der Grünen Taste 7 innerhalb einer vorbestimmten Zeitperiode (beispielsweise 5 Sekunden) geht die Benutzungsoberfläche in einen dritten Zustand, dem Wählzustand, über, in dem der Versuch der Herstellung einer Verbindung zu der entsprechenden Nummer unternommen wird.

## Patentansprüche

1. Benutzungsoberfläche (5) für CLASS-Funktionen eines Fernsprechgeräts eines analogen Netzes,
**dadurch gekennzeichnet, daß**
die Benutzungsoberfläche (5) zwei Funktionen "Aktivieren" und "Deaktivieren" umfaßt, so daß die der Funktion "Aktivieren" folgende Befehlssequenz als CLASS- Funktion interpretiert und eingeschaltet wird und mit der Funktion "Deaktivieren" die nachfolgende Befehlssequenz als "CLASS-Funktion" interpretiert und ausgeschaltet wird.

2. Benutzungsoberfläche nach Anspruch 1, **dadurch gekennzeichnet, daß** die Funktion "Aktivieren" zur Steuerung des Funktionsablauf einer komplexen "CLASS-Funktion" verwendet wird.

3. Benutzungsoberfläche nach einem der vorangegangenen Ansprüche, **dadurch gekennzeichnet, daß** die Funktionen "Aktivieren" und "Deaktivieren" zur Signalisierung des Netzzustandes verwendet werden.

4. Benutzungsoberfläche nach einem der vorangegangenen Ansprüche, **dadurch gekennzeichnet, daß** die Funktionen "Aktivieren" und "Deaktivieren" durch feste Tasten (7, 8) realisiert sind.

5. Benutzungsoberfläche nach einem der vorangegangenen Ansprüche, **dadurch gekennzeichnet, daß** die CLASS-Funktionen der Benutzungsoberfläche (5) durch programmierbare Tasten (9 - 22) gebildet werden.

6. Benutzungsoberfläche nach Anspruch 5, **dadurch gekennzeichnet, daß** die Tasten (9 - 22) der CLASS-Funktionen bei Verwendung ohne die Funktion "Aktivieren" als Zielwahltasten verwendet werden.

7. Benutzungsoberfläche nach einem der Ansprüche 5 oder 6, **dadurch gekennzeichnet, daß** für die Funktionen "Aktivieren", "Deaktivieren" zwei feste Tasten (7, 8) und für die CLASS-Funktionen vierzehn programmierbare Tasten (9 - 22) verwendet werden.

8. Benutzungsoberfläche nach einem der vorangegangenen Ansprüche, **dadurch gekennzeichnet, daß** die Benutzungsoberfläche (5) ein Display (4) aufweist.

9. Benutzungsoberfläche nach einem der vorangegangenen Ansprüche, **dadurch gekennzeichnet, daß** in der Benutzungsoberfläche (5) eine Liste der eingehenden Anrufe geführt wird.

10. Benutzungsoberfläche nach Anspruch 9, **dadurch gekennzeichnet, daß** die Liste als FIFO organisiert ist.

11. Benutzungsoberfläche nach einem der Ansprüche 9 oder 10, **dadurch gekennzeichnet, daß** aus der Liste heraus ein Direct Call abgesetzt werden kann.

12. Fernsprechgerät für ein analoges Netz umfassend eine Benutzungsoberfläche nach einem der Ansprüche 1 - 11.

## Claims

1. User interface (5) for CLASS functions of a telephone device of an analogue network,
**characterised in that**
said user interface (5) comprises two functions "activation" and "deactivation", such that the command sequence following the "activation" function is interpreted as a CLASS function and is activated and the "deactivation" function is used to interpret the following command sequence as a "CLASS function" and deactivate it.

2. User interface according to claim 1, **characterised in that** said "activation" function is used for controlling the execution of the functional sequence of a complex "CLASS function".

3. User interface according to one of the preceding claims, **characterised in that** the "activation" and "deactivation" functions are used for signalling the network status.

4. User interface according to one of the preceding claims, **characterised in that** the "activation" and "deactivation" functions are implemented by means of fixed keys (7, 8).

5. User interface according to one of the preceding claims, **characterised in that** the CLASS functions of the user interface (5) are embodied by means of programmable keys (9 - 22).

6. User interface according to claim 5, **characterised in that** the keys (9 - 22) of said CLASS functions are used as speed dialling keys when used without the "activation" function.

7. User interface according to claim 5, **characterised in that** two fixed keys (7, 8) are used for the "activation" and "deactivation" functions and fourteen programmable keys (9 - 22) are used for the CLASS functions.

8. User interface according to one of the preceding claims, **characterised in that** the user interface (5) has a display (4).

9. User interface according to one of the preceding claims, **characterised in that** a list of incoming calls is maintained in the user interface (5).

10. User interface according to claim 9, **characterised in that** the list is organised as a FIFO.

11. User interface according to one of the claims 9 or 10, **characterised in that** a direct call can be placed from within the list.

12. Telephone device for an analogue network comprising a user interface according to one of the claims 1 to 11.

## Revendications

1. Surface d'utilisation (5) pour les fonctions CLASS d'un appareil téléphonique d'un réseau analogique,
**caractérisée en ce que**
la surface d'utilisation (5) comporte deux fonctions "activer" et "désactiver", de sorte que la séquence de commandes qui suit la fonction "activer" est interprétée comme fonction CLASS et est branchée et la séquence de commandes qui suit la fonction "désactiver" est interprétée comme "fonction CLASS" et est débranchée.

2. Surface d'utilisation selon la revendication 1, **caractérisée en ce que** la fonction "activer" est utilisée pour commander le déroulement d'une "fonction CLASS" complexe.

3. Surface d'utilisation selon l'une des revendications précédentes, **caractérisée en ce que** les fonctions "activer" et "désactiver" sont utilisées pour signaler l'état du réseau.

4. Surface d'utilisation selon l'une des revendications précédentes, **caractérisée en ce que** les fonctions "activer" et "désactiver" sont exécutées par des touches (7, 8) attribuées fixement.

5. Surface d'utilisation selon l'une des revendications précédentes, **caractérisée en ce que** les fonctions CLASS de la surface d'utilisation (5) sont formées par des touches programmables (9 à 22).

6. Surface d'utilisation selon la revendication 5, **caractérisée en ce que** les touches (9 à 22) des fonctions CLASS sont utilisées comme touches de sélection de numéro lorsqu'elles sont utilisées sans la fonction "activer".

7. Surface d'utilisation selon l'une des revendications 5 ou 6, **caractérisée en ce que** deux touches (7, 8) activées fixement sont utilisées pour les fonctions "activer" et "désactiver", quatorze touches programmables (9 à 22) étant utilisées pour les fonctions CLASS.

8. Surface d'utilisation selon l'une des revendications précédentes, **caractérisée en ce que** la surface d'utilisation (5) présente un affichage (4).

9. Surface d'utilisation selon l'une des revendications précédentes, **caractérisée en ce qu'**une liste des appels entrés est établie dans la surface d'utilisation (5).

10. Surface d'utilisation selon la revendication 9, **caractérisée en ce que** la liste est organisée selon le principe FIFO.

11. Surface d'utilisation selon l'une des revendications 9 ou 10, **caractérisée en ce qu'**un appel direct peut être établi à partir de la liste.

12. Appareil téléphonique pour un réseau analogique, qui comprend une surface d'utilisation selon l'une des revendications 1 à 11.
